# EUROPÄISCHE PATENTSCHRIFT

(11) **EP 0 982 567 B1**
(45) Veröffentlichungstag und Bekanntmachung des Hinweises auf die Patenterteilung: **26.09.2001**
(21) Anmeldenummer: 99113103.8
(22) Anmeldetag: 07.07.1999
(51) Int. Cl.: G01C 9/26

(54) **Wasserwaage**
Bubble level
Niveau à bulle

(30) Priorität: 14.08.1998 DE 29814656 U
(43) Veröffentlichungstag der Anmeldung: 01.03.2000
(73) Patentinhaber: Stabila-Messgeräte Gustav Ullrich GmbH & Co.KG, 76855 Annweiler am Trifels (DE)
(72) Erfinder: von Wedemeyer, Peter, Dipl.-Ing., 76855 Annweiler am Trifels (DE)
(74) Vertreter: Stoffregen, Hans-Herbert, Dr. Dipl.-Phys.

(56) Entgegenhaltungen:
- EP-A- 0 178 257
- US-A- 5 479 717

## Beschreibung

Die Erfindung betrifft Wasserwaagen gemäß dem Oberbegriff des Anspruchs 1, hergestellt aus einem Profilkörper aus Metall, Holz oder Kunststoff, in den üblicherweise zwei Libellen eingesetzt sind.

Wasserwaagen sind auf der Welt millionenfach im Einsatz. Sie werden dazu verwendet, um Gegenstände exakt waagerecht und senkrecht auszurichten. Sie besitzen üblicherweise einen langgestreckten Grundkörper mit rechteckigem Querschnitt, der aus Holz, Metall oder auch Kunststoff bestehen kann.

Wasserwaagen mit einem Grundkörper aus Kunststoff sind beispielsweise bekannt aus DE-U 72 12 246 oder DE-U 77 04 713.

Am weitesten verbreitet sind Wasserwaagen, deren Grundkörper aus einem Hohlprofil mit rechteckigem Querschnitt besteht. Als Material wird überwiegend Leichtmetall verwendet, da dieses sich im Strangpreßverfahren formen läßt und sowohl leicht als auch korrossionsfest ist.

Alle Wasserwaagen sind mehr oder weniger empfindlich gegen Schläge. Dies gilt insbesondere für die aus einem Hohlprofil hergestellten Wasserwaagen. Es kommt zu Einbeulungen, die die Wasserwaage unbrauchbar machen.

In vielen Fällen läßt sich das auszurichtende Werkstück jedoch nur mit Hilfe eines Werkzeugs, beispielsweise eines Hammers, in die korrekte Position bringen. Soll die Wasserwaage nicht beschädigt werden, so muß sie jedesmal vom Werkstück weggenommen und anschließend wieder angelegt werden. Dies ist umständlich und zeitraubend.

Viele Berufszweige sind darauf angewiesen, daß die Wasserwaage auch während des Ausrichtens mit Hilfe des Hammers stets am Werkstück angelegt bleibt, wenn ein einwandfreies und schnelles Arbeitsergebnis erreicht werden soll. Typische Beispiele sind Fliesenleger und Maurer. Diese verarbeiten heute zunehmend schlagempfindliche Materialien, z. B. Porentonziegel, Gasbetonsteine, Fliesen und Platten. Diese werden nicht mehr in einem dicken Mörtelbett sondern in dünnen Kleberbetten verarbeitet und mit weichen Gummihämmem angeklopft. Dabei ist dann immer ein störender Werkzeugwechsel erforderlich. Hier ist es günstiger, den Stein durch leichtes Klopfen auf die Wasserwaage in das Kleberbett zu drücken. Hier bildet die Oberseite der Wasserwaage die einzig brauchbare Fläche, auf die mit dem Hammer geklopft werden kann. Da die üblichen Leichtmetall-Hohlprofile durch die Schläge mit dem Hammer beschädigt würden, werden in diesen Berufszweigen auch heute noch Wasserwaagen mit einem Grundkörper aus Holz verwendet, obwohl Holz bekanntermaßen zur Herstellung von Wasserwaagen weniger geeignet ist.

Der vorliegenden Erfindung liegt die Aufgabe zugrunde, hier Abhilfe zu schaffen und die herkömmlichen Wasserwaagen so weiterzubilden, daß Schläge mit einem Werkzeug nicht zu Beschädigungen führen.

Diese Aufgabe wird gelöst durch eine Wasserwaage mit den Merkmalen des Anspruchs 1.

Dank der erfindungsgemäßen Schutzkappe wird die punktförmige Schlagenergie von Werkzeugen wie Hammer, Beil, Maurerkelle usw. breitflächig auf die Oberseite des Profilkörpers verteilt, so daß es nicht mehr zu Beschädigungen, Beulen usw. kommt. Gleichwohl wird genügend Energie auf das auszurichtende Werkstück übertragen. Die Wasserwaage muß nicht mehr vom Werkstück abgenommen werden, so daß sofort erkennbar ist, ob das Werkstück die gewünschte waagerechte oder senkrechte Sollage erreicht hat.

Gemäß einer vorteilhaften Ausgestaltung der Erfindung ist die Schutzkappe so ausgebildet, daß sie die Schlagenergie bevorzugt in die Seitenwände des Profilkörpers einleitet. Dies ist insbesondere dann von Vorteil, wenn der Profilkörper aus Leichtmetall besteht.

Vorteilhafterweise sitzt die Schutzkappe abnehmbar auf dem Profilkörper. Sie kann somit in einem getrennten Arbeitsgang hergestellt, abgelängt und dann auf den Profilkörper der Wasserwaage aufgeschoben werden. Dies erlaubt auch ein etwaiges Auswechseln der Schutzkappe.

Zur Verbesserung des Haltes der Schutzkappe auf dem Profilkörper besitzt dieser bevorzugt wenigstens eine Feder, die Schutzkappe eine entsprechende Nut.

Als Material zur Herstellung der Schutzkappe eignen sich alle schlagfesten und doch elastischen Materialien. In Betracht kommen bevorzugt Gummi. Brauchbar sind aber auch Kunststoffe, Holz und bestimmte Metalle, z. B. Blei wegen seiner hohen Schlagdämpfung.

Gemäß einer bevorzugten Weiterbildung der Erfindung besteht die Schutzkappe aus einem Materialverbund, wobei die inneren Schichten relativ weicher, die äußeren Schichten dagegen relativ härter gewählt werden.

Anhand der Zeichnung soll die Erfindung in Form eines Ausführungsbeispiels näher erläutert werden. Es zeigen
Fig. 1 eine Wasserwaage mit Schutzkappe als Seitenansicht und
Fig. 2 die Wasserwaage der Fig. 1 als Frontansicht.

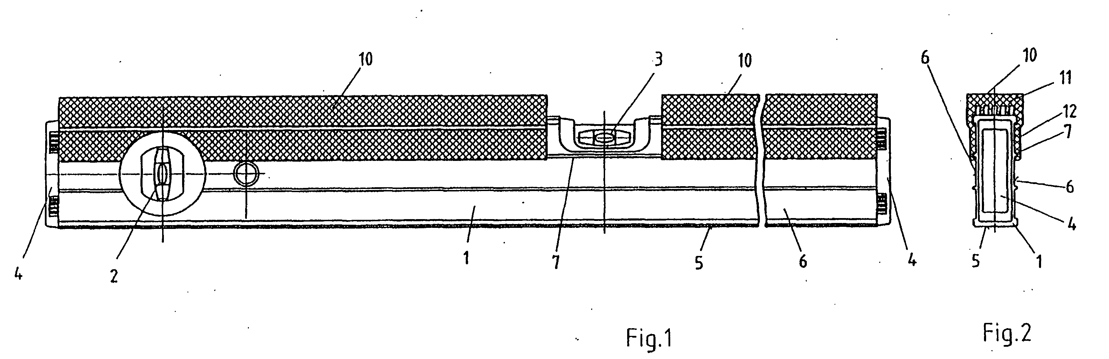

Fig. 1 und 2 zeigen als Seitenansicht und als Frontansicht eine Wasserwaage, im wesentlichen bestehend aus einem hohlen Profilkörper 1 mit einer Meßsohle 5 an der Unterseite und zwei parallelen Seitenwänden 6. Die Enden des Profilkörpers 1 sind mit Endkappen 4 verschlossen. Eine Vertikallibelle 2 und eine Horizontallibelle 3 erlauben das exakt senkrechte bzw. waagerechte Ausrichten der Meßsohle 5 und der Werkstücke, an die die Wasserwaage angelegt wird.

Auf die Oberseite des Profilkörpers 1 eine Schutzkappe 10 aufgesetzt. Diese besitzt zwei Seitenwände 12 mit einer innen eingearbeiteten Nut, die in einer an der Außenseite des Profilkörpers 1 vorgesehenen Feder 7 des Profilkörpers 1 einrastet.

Die Innenseite 11 der Schutzkappe 10 ist so profiliert, daß die punktförmige Schlagenergie beispielsweise eines Hammers bevorzugt in die parallelen Seitenwände 6 des Profilkörpers 1 eingeleitet werden. Dadurch wird ein Einbeulen der Oberseite des Profilkörpers 1 vermieden.

Eine Beschädigung der Meßsohle 5 ist nicht zu erwarten, da diese üblicherweise einen großflächigen Kontakt mit dem Werkstück hat.

Zur Herstellung der Schutzkappe 10 eignen sich grundsätzlich alle schlagfesten, elastischen Materialien, insbesondere Gummi und vergleichbare Kunststoffe, aber auch Holz und bestimmte Metalle. Eine noch bessere Abstimmung läßt sich durch einen Materialverbund erreichen, wobei dessen innere Schichten relativ weicher, die äußeren Schichten relativ härter gewählt werden.

## Patentansprüche

1. Wasserwaage, im wesentlichen umfassend
- einen Profilkörper (1) aus Metall, Holz oder Kunststoff mit
-- wenigstens einer Meßsohle (5)
-- und Seitenwänden
- und wenigstens einen Lagesensor, vorzugsweise eine Libelle (2, 3),
**gekennzeichnet durch** die Merkmale:
- die Oberseite des Profilkörpers (1) trägt eine Schutzkappe (10) aus einem elastischen, schlagfesten Material,
- die Schutzkappe (10) verteilt punktförmig eingeleitete Schlagenergie auf eine größere Fläche des Profilkörpers (1).

2. Wasserwaage nach Anspruch 1, **gekennzeichnet durch** das Merkmal:
- die Schutzkappe (10) leitet die Schlagenergie bevorzugt in die Seitenwände (6) ein.

3. Wasserwaage nach Anspruch 1 oder 2, **gekennzeichnet durch** das Merkmal:
- die Schutzkappe (10) sitzt abnehmbar auf dem Profilkörper (1).

4. Wasserwaage nach Anspruch 1, **gekennzeichnet durch** die Merkmale:
- der Profilkörper (1) besitzt wenigstens eine Feder (7),
- die Schutzkappe (10) eine entsprechende Nut.

5. Wasserwaage nach einem der Ansprüche 1 bis 4, **gekennzeichnet durch** das Merkmal:
- der Profilkörper (1) besteht aus Leichtmetall.

6. Wasserwaage nach einem der Ansprüche 1 bis 5, **gekennzeichnet durch** das Merkmal:
- die Schutzkappe (10) besteht aus Gummi.

7. Wasserwaage nach einem der Ansprüche 1 bis 5, **gekennzeichnet durch** das Merkmal:
- die Schutzkappe (10) besteht aus Kunststoff.

8. Wasserwaage nach einem der Ansprüche 1 bis 5, **gekennzeichnet durch** das Merkmal:
- die Schutzkappe (10) besteht aus Holz.

9. Wasserwaage nach einem der Ansprüche 1 bis 5, **gekennzeichnet durch** das Merkmal:
- die Schutzkappe (10) besteht aus Metall.

10. Wasserwaage nach einem der Ansprüche 1 bis 9, **gekennzeichnet durch** die Merkmale:
- die Schutzkappe (10) besteht aus einem Materialverbund, die inneren Schichten sind relativ weicher,
- die äußeren Schichten relativ härter.

## Claims

1. A bubble level basically including
- a section element of metal, wood or synthetic material having
- at least one bottom surface for measuring
- and side walls
- and at least one position sensor as a vial,
**wherein**
a protective cap of an elastic, impact-proof material is placed on an upper side of the section element such that a concentrated impact energy introduced to the protective cap is distributed over a large surface area of the section element.

2. The bubble level according to claim 1,
**wherein**
the protective cap distributes the impact energy preferably into the side walls of the section element.

3. The bubble level according to claim 1 or 2,
**wherein**
the protective cap is removably mounted on the section element.

4. The bubble level according to claim 1,
**wherein**
the section element has at least a tongue and the protective cap has at least a corresponding groove.

5. The bubble level according to one of the claims 1 to 4,
**wherein**
the section element is of light metal.

6. The bubble level according to one of the claims 1 to 5,
**wherein**
the protective cap is of rubber.

7. The bubble level according to one of the claims 1 to 5,
**wherein**
the protective cap is of synthetic material.

8. The bubble level according to one of the claims 1 to 5,
**wherein**
the protective cap is of wood.

9. The bubble level according to one of the claims 1 to 5,
**wherein**
the protective cap is of metal.

10. The bubble level according to one of the claims 1 to 9,
**wherein**
the protective cap is of a composite material having inner and outer layers, wherein the inner layers are of a relatively soft material and the outer layers are of a relatively hard material.

## Revendications

1. Niveau à bulle, comprenant essentiellement
- un corps en profilé (1) de métal, bois ou plastique avec
- au moins une semelle de mesure (5)
- et des parois latérales (6),
- et au moins un détecteur de position, de préférence une nivelle (2, 3),
**caractérisé en ce que** :
- la partie supérieure du corps en profilé (1) porte un couvercle de protection (10) réalisé dans un matériau élastique antichoc,
- le couvercle de protection (10) répartit sur une surface plus importante du corps en profilé (1) une énergie d'impact appliquée ponctuellement.

2. Niveau à bulle selon la revendication 1, **caractérisé en ce que** :
- le couvercle de protection (10) dirige l'énergie d'impact de préférence dans les parois latérales (6).

3. Niveau à bulle selon la revendication 1 ou 2, **caractérisé en ce que** :
- le couvercle de protection (10) est placé de manière amovible sur le corps en profilé (1).

4. Niveau à bulle selon la revendication 1, **caractérisé en ce que** :
- le corps en profilé (1) possède au moins une languette (7),
- le couvercle de protection (10) une rainure correspondante.

5. Niveau à bulle selon l'une des revendications 1 à 4, **caractérisé en ce que** :
- le corps en profilé (1) est en métal léger.

6. Niveau à bulle selon l'une des revendications 1 à 5, **caractérisé en ce que** :
- le couvercle de protection (10) est en caoutchouc.

7. Niveau à bulle selon l'une des revendications 1 à 5, **caractérisé en ce que** :
- le couvercle de protection (10) est en plastique.

8. Niveau à bulle selon l'une des revendications 1 à 5, **caractérisé en ce que** :
- le couvercle de protection (10) est en bois.

9. Niveau à bulle selon l'une des revendications 1 à 5, **caractérisé en ce que** :
- le couvercle de protection (10) est en métal.

10. Niveau à bulle selon l'une des revendications 1 à 9, **caractérisé en ce que** :
- le couvercle de protection (10) est en un matériau composite, les couches intérieures étant relativement plus tendres,
- les couches extérieures étant relativement plus dures.
